# EUROPEAN PATENT SPECIFICATION

(11) **EP 3 385 451 B1**
(45) Date of publication and mention of the grant of the patent: **26.08.2020**
(21) Application number: 18162054.3
(22) Date of filing: 15.03.2018
(51) Int. Cl.: E02D 27/42, F03D 13/25

(54) **SUPPORT STRUCTURE FOR AN OFFSHORE WIND TURBINE**
TRAGKONSTRUKTION FÜR EINE OFFSHORE-WINDKRAFTANLAGE
STRUCTURE DE SUPPORT DESTINÉE À UNE ÉOLIENNE OFFSHORE

(30) Priority: 16.03.2017 BE 201705164
(43) Date of publication of application: 10.10.2018
(73) Proprietor: DEME Offshore BE N.V., 2070 Zwijndrecht (BE)
(72) Inventor: Nekeman, Sebastian, 4819 AM Breda (NL); Hermeling, Vincent Michael, 9050 Gentbrugge (BE)
(74) Representative: Brouwer, Hendrik Rogier

(56) References cited:
- EP-A1- 3 246 471
- WO-A1-2014/027212
- DE-U1-202012 002 730
- DE-U1-202015 103 351
- GB-A- 2 460 172
- US-A1- 2010 132 270

## Description

### TECHNICAL FIELD OF THE INVENTION

The invention relates to a support structure for an offshore wind turbine. The invention likewise relates to a method for anchoring the support structure to an underwater bottom. Finally, the invention relates to a ballast holder configured to be placed on an upper side of the support structure.

### BACKGROUND OF THE INVENTION

An offshore wind turbine is generally placed on a support structure which is anchored to the seabed in any way. The support structure is configured to bridge the distance from the seabed to a position above the water surface and can be embodied in different ways. The support structure can thus comprise a single pile (a monopile) or be embodied as a lattice structure, also referred to as jacket. The support structure has to be anchored to the bottom in any way, wherein a pile foundation is common. The foundation piles are connected to the support structure on an underside of the support structure, for instance by means of a grouted connection.

A support structure relevant to the present invention is anchored to the seabed in other manner and comprises a lattice, formed around a central axis, of corner piles and stiffening ribs, and, provided on an underside of the support structure, suction buckets configured to be suctioned into an underwater bottom and thus anchor the support structure to the underwater bottom. Suction bucket openings are here directed toward the seabed. Once the suction buckets mounted on the support structure have been lowered onto the seabed, and have optionally penetrated partially into the seabed by self-penetration, the contents of the suction buckets are placed under a (partial) vacuum, wherein the suction buckets are suctioned into and penetrate (further) into the seabed or other underwater bottom. The support structure is in this way anchored to the seabed. The support structure further comprises a connecting flange for a wind turbine tower, provided on an upper side of the support structure. The connecting flange transmits the loads exerted on the support structure by the wind turbine via the corner piles and the suction buckets to the seabed.

DE 202012002730 U1 discloses a lattice support structure for an offshore wind turbine, and may be of the type having suction buckets. The structure is at the top provided with a connection flange for a wind turbine tower, and this top side may also be provided with a platform. Because the platform is asymmetric due to its railing, the center of gravity of the railing is eccentric compared to a central axis of the support structure.

US 2010/132270 A1 also describes a support structure for an offshore wind turbine. The support structure is constructed as a lattice and is equipped with suction buckets. At the top, a nacelle is provided with has an eccentric mass relative to a central axis of the structure.

DE 202015103351 U1 discloses a lattice-support structure for an offshore wind turbine, provided with a transition piece on top of it. A platform is also fitted at the top. The support structure does not comprise suction buckets.

WO 2014027212 A1 describes a transition piece that is built next to a central column of inclined legs and sliding plates. The transition piece is said to provide a good load transfer between wind turbine tower and foundation.

GB 2460172 A discloses a method of applying a foundation pile to an underwater system using a temporary support frame, whereas EP 3246471 A1 is concerned with a clamping system on a vessel for transporting suction buckets.

It is important that the support structure is aligned substantially vertically with the seabed when it is anchored. This is because a possible aberration from a vertical position affects the wind turbine tower connected to the support structure, which could thereby come to lie at an incline relative to the horizon.

### SUMMARY OF THE INVENTION

The present invention has for its object to provide a support structure for an offshore wind turbine and corresponding method for anchoring the support structure to an underwater bottom, wherein the above stated drawbacks of the prior art are at least partially obviated.

According to the invention, this object is achieved by providing a support structure according to claim 1. Particularly provided is a support structure for an offshore wind turbine comprising a lattice, formed around a central axis, of corner piles and stiffening ribs, and, provided on an underside of the support structure, suction buckets configured to be suctioned into an underwater bottom and thus anchor the support structure to the underwater bottom, and further, provided on an upper side of the support structure, a connecting flange for a wind turbine tower, wherein the upper side also comprises a ballast holder in which mass is received, this in a manner such that the centre of gravity of the mass lies eccentrically relative to the central axis. The ballast holder ensures not only that the suction buckets are able to penetrate into the seabed sufficiently (rapidly), but that the distribution of the load over the suction buckets is also uniform. This advances a uniform penetration, which means that the suction buckets are able to penetrate into the underwater bottom over substantially the same distance at the same time, whereby the support structure remains in upright orientation and the central axis shows no significant aberration from the vertical direction.

The ballast holder is preferably employed in a situation in which the self-penetration under the own weight of the suction buckets has taken place to insufficient degree to allow the suction process to be started in sufficiently safe manner. There is indeed a risk that when the degree of penetration is too low, so-called piping may occur during build-up of the underpressure in the suction buckets. Piping comprises of the development of seepage paths for seabed material from outside to inside the suction bucket(s). Such seepage paths are undesirable because they counteract the build-up of underpressure. Non-uniform self-penetration of the individual suction buckets can also result in the above stated problems. In addition, non-uniform self-penetration is undesirable as a starting position prior to the start of the suction process.

The advantages of the invention are manifest since the support structure comprises on the upper side a platform, the centre of gravity of which lies eccentrically relative to the central axis. The ballast holder provided with eccentrically placed mass allows for compensation of this eccentricity. According to the invention, the joint centre of gravity of the mass and the platform lies substantially on the central axis.

In the context of the present application substantially is understood to mean an aberration from 0% to a maximum of 10%, more preferably to a maximum of 5% and most preferably to a maximum of 2%.

The ballast holder can in principle be placed in direct connection with the connecting flange of the support structure. Since this can cause damage to the connecting flange in some cases, an embodiment of the support structure has the feature that the ballast holder supports on the connecting flange with interposing of an intermediate carrier frame. This embodiment can also bridge a determined height between the connecting flange and the ballast holder, which can provide space to structures which are optionally present on the platform, such as for instance a partition or hydraulic equipment.

The carrier frame can in principle have any shape, as long as the loads exerted on the support structure by the ballast holder are substantially transmitted via the carrier frame to the connecting flange. This is because the latter is configured to be able to bear and transmit the load of a wind turbine tower mounted on the support structure. A suitable embodiment comprises a support structure, wherein the carrier frame substantially has the shape of the connecting flange and supports with a lower edge on the connecting flange so that the weight of the ballast holder is transmitted to the connecting flange.

In order to further counteract damage to the connecting flange, the lower edge of the carrier frame is in another embodiment provided with rubber and/or with a low-friction plastic, for instance HDPE or PTFE (Teflon™).

The ballast holder according to the invention can take any form, as long as it is able to hold, receive therein or fasten thereto a mass. A practical embodiment is provided in that the ballast holder comprises longitudinal beams which are mutually connected with intermediate beams and form a first support surface for mass received in the ballast holder. Another embodiment relates to a ballast holder comprising longitudinal beams which are mutually connected with intermediate beams and form a second support surface, placed at a height distance from the first support surface, for mass received in the ballast holder. Two or more support surfaces are in this way provided for the mass, which allows the overall weight of the mass to be increased.

The support structure can be placed with the suction buckets on a seabed in any known manner using a hoisting means, for instance from a jack-up platform. The support structure is provided for this purpose with a per se known hoisting frame with lifting eyes. If desired, the ballast holder and/or the carrier frame can be lifted together with the support structure. It is also possible to lift the ballast holder and/or the carrier frame with a hoisting means, and to place them on a support structure which has already been placed on the seabed, individually. In an embodiment suitable for this purpose the ballast holder and/or the carrier frame comprises a number of lifting eyes by which the ballast holder or the carrier frame can be lifted using a hoisting means. By providing at least the ballast holder with a number of lifting eyes it is possible, subject to the eccentricity of the mass received in the ballast holder, to choose the position of the operational lifting eyes such that the ballast holder with mass remains substantially in a horizontal position during lifting with the hoisting means. This facilitates the placing of the ballast holder on the support structure or on the carrier frame.

In order to place the ballast holder on the carrier frame (and thus also on the support structure) in the desired position the ballast holder comprises in an embodiment a centering member which can co-act with a centering member of the carrier frame. It is important to place the ballast holder in the desired position, failing which the centre of gravity of the support structure, ballast holder and optionally platform and related structures would no longer be able to lie on the central axis.

The mass to be received in the ballast holder can take any form. It is thus possible to add the mass as liquid, as granulate or as other particles, such as sand, gravel, stones, rocks and so on. A practical embodiment relates to a support structure wherein the mass comprises a number of block-shaped bodies of steel or plastic. Such bodies are per se known, for instance as counterweights for lifting cranes. An advantage of this embodiment is that the weight and the position in the ballast holder of such block-shaped bodies can be precisely determined, whereby the position of the centre of gravity of the mass can be precisely determined, if desired prior to penetration of the support structure into the seabed.

Another embodiment allows the weight distribution and the position of the centre of gravity to be changed during penetration of the support structure into the seabed if this is required, for instance if the support structure is in danger of becoming inclined due to non-uniform penetration of the suction buckets into the seabed. This embodiment is characterized in that the mass is displaceable in the ballast holder and in that the block-shaped bodies are preferably displaceable in the ballast holder. This can for instance be achieved by moving the bodies over sliding surfaces or over a rail guide arranged in the ballast holder while they are driven in suitable manner, for instance by means of jacks.

In another aspect of the invention a method is provided for anchoring to an underwater bottom of a support structure for an offshore wind turbine comprising a lattice, formed around a central axis, of corner piles and stiffening ribs, and, provided on an underside of the support structure, suction buckets, and, provided on an upper side of the support structure, a connecting flange for a wind turbine tower, the method comprising of placing the support structure on the underwater bottom, placing a ballast holder in which mass is received on an upper side of the support structure in a manner such that the centre of gravity of the mass lies eccentrically relative to the central axis, and partially emptying the suction buckets by suction, whereby they penetrate into the underwater bottom.

In a preferred embodiment of the method the placing of the support structure and/or the ballast holder is performed by a hoisting means present on a floating device or jack-up platform.

In another embodiment the support structure comprises on the upper side a platform, the centre of gravity of which lies eccentrically relative to the central axis, and the mass is arranged in the ballast holder such that the joint centre of gravity of the mass and the platform lies substantially on the central axis.

Another embodiment relates to a method wherein, prior to placing of the ballast holder, a carrier frame, on which the ballast holder is placed, is placed on the connecting flange. The carrier frame preferably has a shape here which corresponds to the shape of the connecting flange, wherein the carrier frame supports with a lower edge on the connecting flange so that the weight of the ballast holder is transmitted to the connecting flange.

Other embodiments of the method has the feature that the ballast holder comprises a number of lifting eyes and the ballast holder is suspended from a hoisting means by chosen lifting eyes such that the ballast holder hangs substantially horizontally; that the ballast holder comprises a centering member and that the ballast holder is placed on the carrier frame such that the centering member co-acts with a centering member of the carrier frame; that the mass comprises a number of block-shaped bodies of steel or plastic which are placed in the ballast holder with a hoisting means; or that the mass is displaced in the ballast holder, at least during penetration of the suction buckets into the underwater bottom. Combinations of such embodiments are also possible.

Yet another aspect of the invention relates to a ballast holder which is configured to be placed on an upper side of a support structure for an offshore wind turbine comprising a lattice, formed around a central axis, of corner piles and stiffening ribs, and, provided on an underside of the support structure, suction buckets which can penetrate into an underwater bottom for anchoring the support structure to the underwater bottom, and further, provided on an upper side of the support structure, a connecting flange for a wind turbine tower, wherein mass is received in the ballast holder, this in a manner such that the centre of gravity of the mass lies eccentrically relative to the central axis.

Such a ballast holder is preferably employed as a reusable adapter which is repeatedly installed on one or more suction buckets in order to achieve an optimal self-penetration when the support structure provided with suction buckets, preferably a jacket, is lowered onto the seabed. After use the reusable adapter in the form of the ballast holder can be disconnected and arranged on a subsequent support structure to be installed.

In an embodiment the ballast holder comprises longitudinal beams which are mutually connected with intermediate beams and form a first support surface for mass received in the ballast holder. Another embodiment relates to a ballast holder comprising longitudinal beams which are mutually connected with intermediate beams and form a second support surface, placed at a height distance from the first support surface, for mass received in the ballast holder.

The mass received in the ballast holder preferably comprises a number of block-shaped bodies of steel and/or of plastic.

Finally, it is stated that the embodiments of the invention described in this patent application can be combined in any possible combination of these embodiments, and that each embodiment can individually form the subject-matter of a divisional patent application.

### BRIEF DESCRIPTION OF THE FIGURES

The invention will now be elucidated in more detail with reference to the accompanying figures, without otherwise being limited thereto. In the figures:
Fig. 1 is a schematic side view of a support structure for a wind turbine, anchored in an underwater bottom with suction buckets;
Fig. 2 is a schematic top view of the support structure shown in fig. 1;
Fig. 3 is a schematic perspective view of a ballast holder part according to an embodiment of the invention;
Fig. 4 is a schematic perspective view of a carrier frame according to an embodiment of the invention applied in combination with the ballast holder;
Fig. 5 is a schematic perspective view of a ballast holder according to an embodiment of the invention, placed on the support structure; and finally
Fig. 6 is a schematic side view of the ballast holder placed on the support structure and shown in fig. 5.

### DETAILED DESCRIPTION OF EXEMPLARY EMBODIMENTS

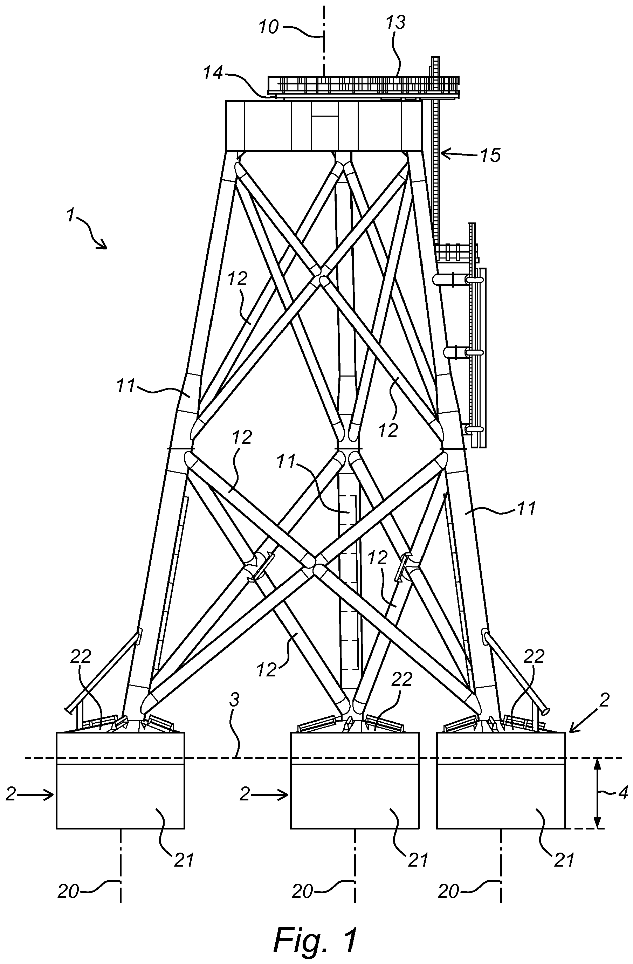

Referring to figure 1, a support structure 1 for an offshore wind turbine (not shown) is shown. A wind turbine generally comprises a wind turbine tower on which a hub is arranged, which carries a rotor provided with wind turbine blades. Support structure 1 bridges the distance between an underwater bottom or seabed 3 and a position above the water surface where support structure 1 is connected to the wind turbine tower. In the shown embodiment support structure 1 (also referred to as jacket) comprises a lattice, formed around a central axis 10, of three corner piles 11 and intermediate stiffening ribs 12 which connect corner piles 11 to each other.

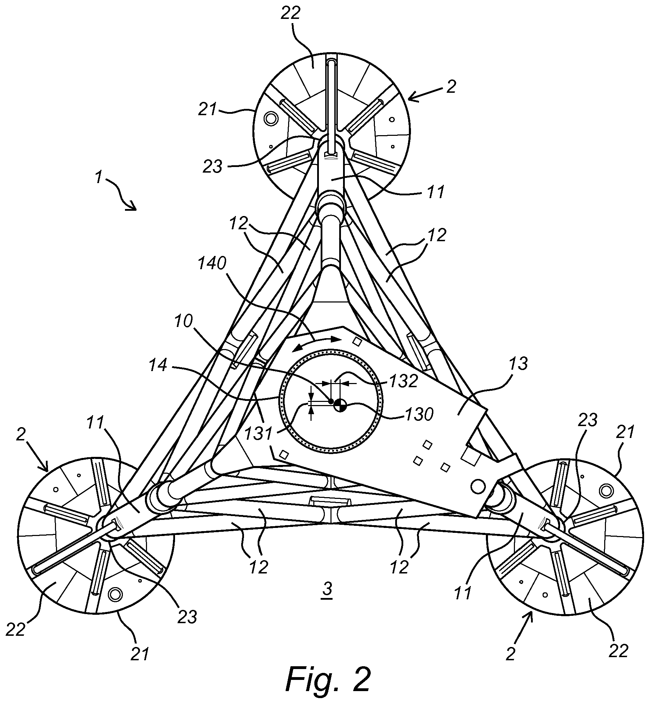

Situated on an upper side of support structure 1 is a platform 13 which is used to fix a wind turbine tower (not shown) on a connecting flange 14 which is also provided on the upper side of support structure 1. Fixing the wind turbine tower on connecting flange 14 can for instance be done by forming a series of bolts connections lying in a peripheral direction 140 of connecting flange 14. Platform 13 can also be used as mooring jetty for vessels, for instance for dropping off personnel on platform 13. Platform 13 is provided for this purpose with ladders 15 hanging down on a side of support structure 1. Connecting flange 14 is structurally connected to corner piles 11 of support structure 1 so that forces generated by the wind turbine tower are transmitted via connecting flange 14 to corner piles 11, and from there via suction buckets 2 to underwater bottom 3. Owing to the shape of platform 13, the centre of gravity 130 thereof lies eccentrically relative to the central axis 10 over distances (131, 132), see figure 2.

Provided on an underside of support structure 1, and more specifically on an underside of corner piles 11, are suction buckets 2 which are configured to be suctioned into an underwater bottom 3 and thus anchor support structure 1 to underwater bottom 3. Figure 1 shows support structure 1 in an anchored situation, wherein suction buckets 2 have penetrated into underwater bottom 3 to a considerable depth 4. The penetration depth 4 can vary subject to the ground, and amounts to for instance 5-10 m. As shown in figures 1 and 2, each suction bucket 2 comprises a tubular structure extending in an axial direction 20 and having a peripheral wall 21. Suction buckets 2 are provided with bucket openings which are directed toward seabed 3 during use. Each suction bucket 2 is provided on an upper side facing away from seabed 3 with a closing plate (or plates) 22 with a connection 23 for a corner pile 11 and also provided with connections for a suction conduit (not shown).

The support structure 1 provided with a number of suction buckets 2 is lowered onto seabed 3 during use, after which an internal space of suction buckets 2 is placed under a (partial) vacuum. In this way suction buckets 2 are suctioned into and penetrate into seabed 3, whereby support structure 1 is anchored to seabed 3. The invention has for its object to improve this process.

A ballast holder 5 in which mass 6 is received is for this purpose provided on the upper side of the support structure, this in a manner such that the centre of gravity of mass 6 lies eccentrically relative to central axis 10.

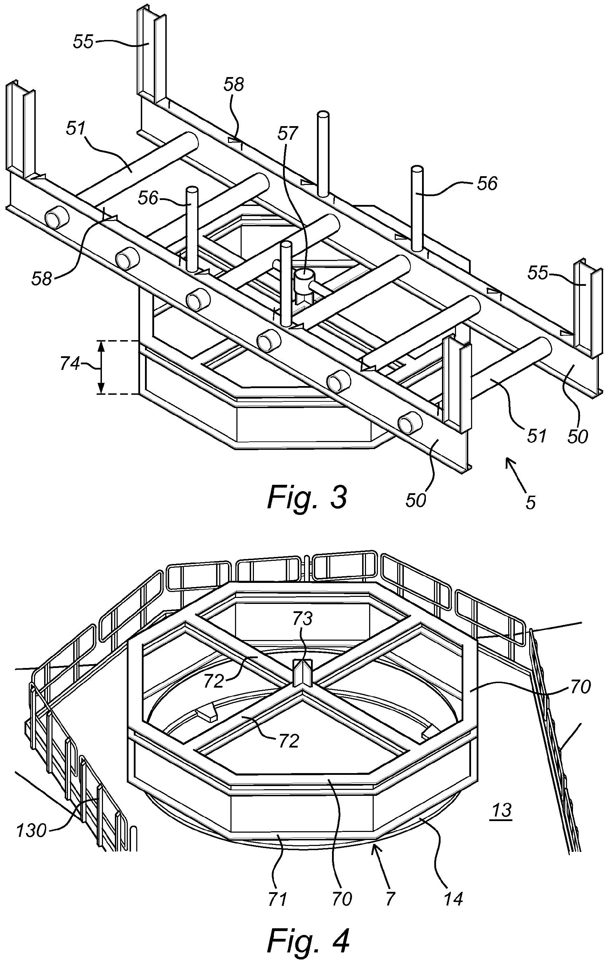

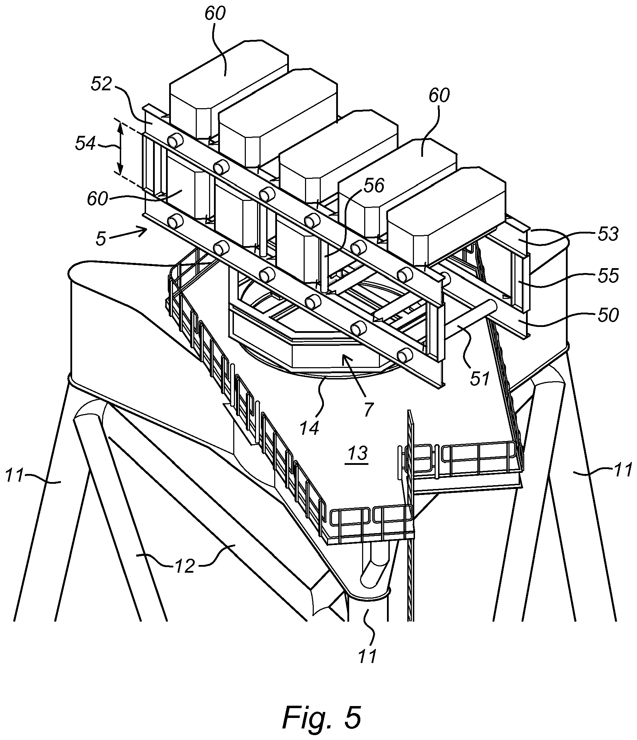

An embodiment of a ballast holder 5 is shown in figures 3, 5 and 6. The shown ballast holder 5 is constructed from longitudinal beams 50 which are mutually connected with intermediate beams 51 and together form a first support surface (50, 51) for mass 6 received in ballast holder 5, see figure 5. The first support surface (50, 51) is visible in figure 3 because ballast holder 5 is shown only partially. Figure 5 shows a complete ballast holder 5 which comprises in addition to the first support surface (50, 51) longitudinal beams 52 which are mutually connected with intermediate beams 53 and form a second support surface (52, 53), placed at height distance 54 from the first support surface (50, 51), for mass 6 received in ballast holder 5. The two support surfaces (50, 51) and (52, 53) are held at distance 54 by upright ribs 55 and optional aligning pins 56. Ballast holder 5 is further provided with a centrally disposed centering member in the form of an upright tube 57. Ballast holder 5 is also provided with a number of lifting eyes 58 by which ballast holder 5 can be lifted with a hoisting means, for instance a lifting crane disposed on a floating device or jack-up platform.

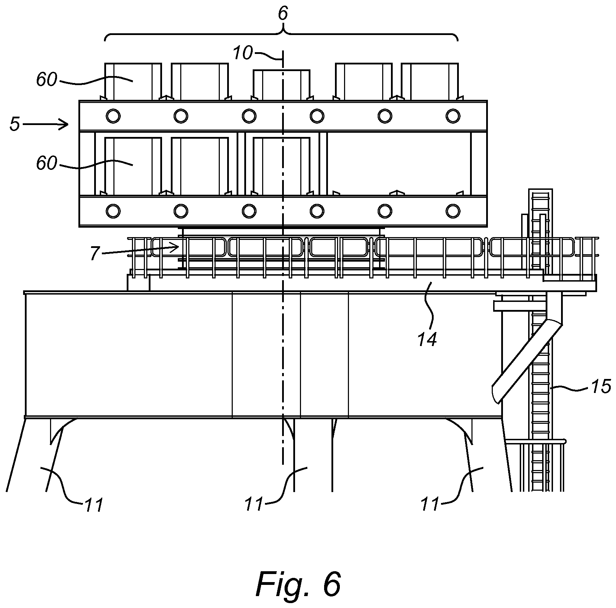

In the shown embodiment the mass 6 comprises a number of block-shaped bodies 60 of for instance steel or plastic which support on the longitudinal beams (50, 52). As shown in figures 5 and 6, bodies 60 are disposed in ballast holder 5 such that the centre of gravity of mass 6 lies at a distance from central axis 10, this in a manner such that the eccentricity of platform 13 is compensated. In other words, the joint centre of gravity of mass 6 and platform 13 with ladder 15 lies on central axis 10. Support structure 1 will hereby move substantially perpendicularly downward during penetration of suction buckets 2 into underwater bottom 3, and thus substantially not become tilted relative to the horizon.

Ballast holder 5 supports on connecting flange 14 with interposing of an intermediate carrier frame 7, as shown in figures 3, 5 and 6. Referring to figure 4, carrier frame 7 has a hexagonal shape which substantially approximates the circular shape of connecting flange 14. Carrier frame 7 is constructed from a number of mutually connected H-profiles 70 which support with a lower edge 71 on connecting flange 14 so that the weight of ballast holder 5 and carrier frame 7 is transmitted to connecting flange 14. In order to prevent damage to connecting flange 14 the lower edge 71 of carrier frame 7 can be provided with rubber and/or with a low-friction plastic, for instance Teflon™ strips. Carrier frame 7 is strengthened in an upper surface with transverse profiles 72 connected in crosswise manner, wherein the cross is provided centrally with an upright centering pin 73. This co-acts with the centering tube 57 of ballast holder 5, this in a manner such that centering tube 57 is slid over centering pin 73 during placing of ballast holder 5 on carrier frame 7. The height 74 of carrier frame 7 is determined by, among other factors, the height of a railing 130 mounted on platform 13.

The position of bodies 60 in ballast holder 5 is in principle predetermined, this preferably in a manner such that the joint centre of gravity of the mass 6 formed by all bodies 60 together and platform 13 with ladder 15 comes to lie on central axis 10. In another embodiment it is also possible to provide a ballast holder 5 in which mass 6 is displaceable, and block-shaped bodies 60 are in particular displaceable. This can for instance be done by placing each body 60 on a carriage with a friction surface with the longitudinal beams (50, 52) which is provided with a low-friction plastic, for instance Teflon™ strips. Bodies 60 can then be slid over the longitudinal beams (50, 52) using for instance hydraulic jacks. The position of the centre of gravity of the mass 6 can hereby be influenced.

With the invented ballast holder 5 a support structure 1 for an offshore wind turbine can be anchored to an underwater bottom 3 by placing support structure 1 on the underwater bottom 3, placing a ballast holder 5, in which mass 6 in the form of eccentrically placed block-shaped bodies 60 is received in a manner such that the centre of gravity of mass 6 lies eccentrically relative to the central axis 10 of support structure 1, on an upper side of support structure 1, and partially emptying the suction buckets 2 by suction, whereby they penetrate into underwater bottom 3. By arranging the eccentric mass 6 the weight of eccentric structures, such as for instance platform 13 with ladder 15, which are optionally arranged on support structure 1, is compensated, whereby support structure 1 has less of a tendency to become tilted relative to the vertical direction.

Placing support structure 1 on underwater bottom 3 and ballast holder 5 and carrier frame 7 on the upper side of support structure 1 can be performed by a hoisting means, for instance a lifting crane, present on a floating device or jack-up platform (not shown).

During placing of bodies 60 in ballast holder 5 it is preferably ensured that the joint centre of gravity of mass 6 and platform 13 with ladder 15 lies on central axis 10. A protective carrier frame 7 can be placed on connecting flange 14 prior to placing of ballast holder 5.

## Claims

1. Support structure (1) for an offshore wind turbine comprising a lattice, formed around a central axis (10), of corner piles (11) and stiffening ribs (12), and, provided on an underside of the support structure (1), suction buckets (2) configured to be suctioned into an underwater bottom (3) and thus anchor the support structure (1) to the underwater bottom (3), and further, provided on an upper side of the support structure (1), a connecting flange (14) for a wind turbine tower, wherein the upper side also comprises a ballast holder (5) in which mass (6) is received, this in a manner such that the centre of gravity of the mass (6) lies eccentrically relative to the central axis (10), wherein the support structure (1) comprises on the upper side a platform (13), the centre of gravity (130) of which lies eccentrically relative to the central axis (10), and wherein the joint centre of gravity of the mass (6) and the platform (13) lies on the central axis (10).

2. Support structure according to claim 1, wherein the ballast holder (5) supports on the connecting flange (14) with interposing of an intermediate carrier frame (7).

3. Support structure according to claim 2, wherein the carrier frame (7) substantially has the shape of the connecting flange (14) and supports with a lower edge (71) on the connecting flange (14) so that the weight of the ballast holder (5) is transmitted to the connecting flange (14).

4. Support structure according to claim 3, wherein the lower edge (71) of the carrier frame (7) is provided with rubber and/or with a low-friction plastic.

5. Support structure according to any one of the foregoing claims, wherein the ballast holder (5) comprises longitudinal beams (50) which are mutually connected with intermediate beams (51) and form a first support surface (50, 51) for mass (6) received in the ballast holder (5).

6. Support structure according to claim 5, wherein the ballast holder (5) comprises longitudinal beams (52) which are mutually connected with intermediate beams (53) and form a second support surface (52, 53), placed at a height distance (54) from the first support surface (50, 51), for mass (6) received in the ballast holder (5).

7. Support structure according to any one of the claims 2-6, wherein the ballast holder (5) comprises a centering member (57) which can co-act with a centering member (72, 73) of the carrier frame (7).

8. Support structure according to any one of the foregoing claims, wherein the mass (6) comprises a number of block-shaped bodies (60) of steel or plastic.

9. Support structure according to any one of the foregoing claims, wherein the mass (6) is displaceable in the ballast holder (5).

10. Method for anchoring to an underwater bottom of a support structure for an offshore wind turbine comprising a lattice, formed around a central axis, of corner piles and stiffening ribs, and, provided on an underside of the support structure, suction buckets, and, provided on an upper side of the support structure, a connecting flange for a wind turbine tower, the method comprising of placing the support structure on the underwater bottom, placing a ballast holder in which mass is received on an upper side of the support structure in a manner such that the centre of gravity of the mass lies eccentrically relative to the central axis, and partially emptying the suction buckets by suction, whereby they penetrate into the underwater bottom, and wherein the support structure comprises on the upper side a platform, the centre of gravity of which lies eccentrically relative to the central axis, and the mass is arranged in the ballast holder such that the joint centre of gravity of the mass and the platform lies substantially on the central axis.

11. Method according to any one of the claims 10-11, wherein prior to placing of the ballast holder a carrier frame, on which the ballast holder is placed, is placed on the connecting flange.

12. Method according to any one of the claims 10-12, wherein the mass comprises a number of block-shaped bodies of steel or plastic which are placed in the ballast holder with a hoisting means.

13. Method according to any one of the claims 10-13, wherein the mass is displaced in the ballast holder, at least during penetration of the suction buckets into the underwater bottom.

## Patentansprüche

1. Tragkonstruktion (1) für eine Offshore-Windkraftanlage, die aufweist ein Gitter, das um eine Mittelachse (10) von Ecksäulen (11) und Versteifungsrippen (12) ausgebildet ist, Ansaugbecher (2), die an einer Unterseite der Tragkonstruktion (1) vorgesehen und ausgestaltet sind, um in einen Unterwasserboden (3) angesaugt zu werden und somit die Tragkonstruktion (1) im Unterwasserboden (3) verankern, und weiterhin einen an einer Oberseite der Tragkonstruktion vorgesehenen Verbindungsflansch (14) für einen Windkraftturm, wobei die Oberseite auch eine Ballasthalterung (5) aufweist, in der Masse (6) aufgenommen wird, in einer Weise, sodass der Schwerpunkt der Masse (6) exzentrisch bezüglich der Mittelachse (10) liegt, wobei die Tragkonstruktion (1) an der Oberseite eine Plattform (13) aufweist, wobei der Schwerpunkt (130) davon sich exzentrisch bezüglich der Mittelachse (10) befindet, und wobei sich der gemeinsame Schwerpunkt der Masse (6) und der Plattform (13) auf der Mittelachse (10) befindet.

2. Tragkonstruktion nach Anspruch 1, wobei die Ballasthalterung (5) am Verbindungsflansch (14) trägt, wobei ein Zwischenträgerrahmen (7) dazwischen angeordnet ist.

3. Tragkonstruktion nach Anspruch 2, wobei der Trägerrahmen (7) im Wesentlichen die Form des Verbindungsflansches (14) hat und mit einer Unterkante (71) am Verbindungsflansch (14) trägt, sodass das Gewicht der Ballasthalterung (5) an den Verbindungsflansch (14) übertragen wird.

4. Tragkonstruktion nach Anspruch 3, wobei die Unterkante (71) des Trägerrahmens (7) mit Kautschuk und/oder einem reibungsarmen Kunststoff vorgesehen ist.

5. Tragkonstruktion nach einem der vorhergehenden Ansprüche,
wobei die Ballasthalterung (5) Längsbalken (50) aufweist, die miteinander mit Zwischenbalken (51) verbunden sind und eine erste Tragfläche (50, 51) für die Masse (6) bilden, die in der Ballasthalterung (5) aufgenommen ist.

6. Tragkonstruktion nach Anspruch 5, wobei die Ballasthalterung (5) Längsbalken (52) aufweist, die miteinander mit Zwischenbalken (53) verbunden sind und eine zweite Tragfläche (52, 53), die an einem Höhenabstand (54) von der ersten Tragfläche (50, 51) angeordnet ist, für die in der Ballasthalterung (5) aufgenommene Masse (6) bilden.

7. Tragkonstruktion nach einem der Ansprüche 2 bis 6, wobei die Ballasthalterung (5) ein Zentrierungselement (57) aufweist, das mit einem Zentrierungselement (72, 73) des Trägerrahmens (7) zusammenwirken kann.

8. Tragkonstruktion nach einem der vorhergehenden Ansprüche, wobei die Masse (6) mehrere blockförmige Körper (60) aus Stahl oder Plastik aufweist.

9. Tragkonstruktion nach einem der vorhergehenden Ansprüche, wobei die Masse (6) in der Ballasthalterung (5) versetzbar ist.

10. Verfahren zum Verankern einer Tragkonstruktion für eine Offshore-Windkraftanlage in einem Unterwasserboden, die aufweist: ein Gitter, das um eine Mittelachse von Ecksäulen und Versteifungsrippen ausgebildet ist, an einer Unterseite der Tragkonstruktion vorgesehene Ansaugbecher und einen an einer Oberseite der Tragkonstruktion vorgesehenen Verbindungsflansch für einen Windkraftturm, wobei das Verfahren aufweist das Anordnen der Tragkonstruktion auf dem Unterwasserboden, Anordnen einer Ballasthalterung, in der Masse aufgenommen ist, an einer Oberseite der Tragkonstruktion in einer Weise, sodass der Schwerpunkt der Masse exzentrisch bezüglich der Mittelachse liegt, und teilweises Leeren der Ansaugtrichter durch Ansaugen, wobei sie in den Unterwasserboden eindringen, und
wobei die Tragkonstruktion an der Oberseite eine Plattform aufweist, deren Schwerpunkt exzentrisch bezüglich der Mittelachse liegt, und die Masse in der Ballasthalterung so angeordnet ist, dass der gemeinsame Schwerpunkt der Masse und der Plattform im Wesentlichen auf der Mittelachse liegt.

11. Verfahren nach einem der Ansprüche 10 bis 11, wobei vor dem Anordnen der Ballasthalterung ein Trägerrahmen, an dem die Balllasthalterung angeordnet wird, am Verbindungsflansch angeordnet wird.

12. Verfahren nach einem der Ansprüche 10 bis 12, wobei die Masse mehrere blockförmige Körper aus Stahl oder Plastik aufweist, die in der Ballasthalterung mit einem Hebemittel angeordnet werden.

13. Verfahren nach einem der Ansprüche 10 bis 13, wobei die Masse in der Ballasthalterung wenigstens während dem Eindringen der Ansaugbecher in den Unterwasserboden versetzt wird.

## Revendications

1. Structure de support (1) destinée à une éolienne marine comprenant un treillis, formé autour d'un axe central (10), de piliers d'angle (11) et de nervures de renforcement (12), et comportant, sur une face inférieure de la structure de support (1), des godets d'aspiration (2) configurés de manière à être aspirés dans un fond sous-marin (3) et à assurer ainsi l'ancrage de la structure de support (1) sur le fond sous-marin (3), et comportant, en outre, sur une face supérieure de la structure de support (1), une bride de liaison (14) pour une tour d'éolienne, dans laquelle la face supérieure comprend aussi un support de ballast (5) dans lequel une masse (6) est reçue, ceci, d'une telle manière que le centre de gravité de la masse (6) est situé de manière excentrée par rapport à l'axe central (10), dans laquelle la structure de support (1) comprend sur la face supérieure, une plate-forme (13), dont le centre de gravité (130) est situé de manière excentrée par rapport à l'axe central (10), et dans laquelle le centre de gravité commun de la masse (6) et de la plate-forme (13) est situé sur l'axe central (10).

2. Structure de support selon la revendication 1, dans laquelle le support de ballast (5) est supporté sur la bride de liaison (14) avec interposition d'un châssis porteur intermédiaire (7).

3. Structure de support selon la revendication 2, dans laquelle le châssis porteur (7) présente sensiblement la forme de la bride de liaison (14) et est supporté avec un bord inférieur (71) sur la bride de liaison (14) de telle sorte que le poids du support de ballast (5) est transmis à la bride de liaison (14).

4. Structure de support selon la revendication 3, dans laquelle le bord inférieur (71) du châssis porteur (7) comporte du caoutchouc et/ou une matière plastique à faible frottement.

5. Structure de support selon l'une quelconque des revendications précédentes, dans laquelle le support de ballast (5) comprend des poutrelles longitudinales (50) qui sont reliées mutuellement à des poutrelles intermédiaires (51) et forment une première surface de support (50, 51) pour la masse (6) reçue sur le support de ballast (5).

6. Structure de support selon la revendication 5, dans laquelle le support de ballast (5) comprend des poutrelles longitudinales (52) qui sont reliées mutuellement à des poutrelles intermédiaires (53) et forment une seconde surface de support (52, 53), placée à une distance verticale (54) par rapport à la première surface de support (50, 51), pour la masse (6) reçue sur le support de ballast (5).

7. Structure de support selon l'une quelconque des revendications 2 à 6, dans laquelle le support de ballast (5) comprend un élément de centrage (57) qui peut coopérer avec un élément de centrage (72, 73) du châssis porteur (7).

8. Structure de support selon l'une quelconque des revendications précédentes, dans laquelle la masse (6) comprend un certain nombre d'éléments en forme de bloc (60) à base d'acier ou de matière plastique.

9. Structure de support selon l'une quelconque des revendications précédentes, dans laquelle la masse (6) peut être déplacée sur le support de ballast (5).

10. Procédé d'ancrage sur un fond sous-marin d'une structure de support destinée à une éolienne marine comprenant un treillis, formé autour d'un axe central, de piliers d'angle et de nervures de renforcement, et, agencés sur une face inférieure de la structure de support, des godets d'aspiration, et agencée sur une face supérieure de la structure de support, une bride de liaison d'une tour d'éolienne, le procédé comprenant la mise en place de la structure de support sur un fond sous-marin, la mise en place d'un support de ballast dans lequel une masse est reçue sur une face supérieure de la structure de support d'une manière telle que le centre de gravité de la masse est situé de manière excentrée par rapport à l'axe central, et le vidage partiel des godets d'aspiration par aspiration, de telle sorte qu'ils pénètrent dans le fond sous-marin, et
dans lequel la structure de support comprend, sur la face supérieure, une plate-forme dont le centre de gravité est situé de manière excentrée par rapport à l'axe central, et la masse est agencée sur le support de ballast de telle sorte que le centre de gravité commun de la masse et de la plate-forme est situé sensiblement sur l'axe central.

11. Procédé selon l'une quelconque des revendications 10 à 11, dans lequel, avant la mise en place du support de ballast, un châssis porteur, sur lequel le support de ballast est placé, est agencé sur la bride de liaison.

12. Procédé selon l'une quelconque des revendications 10 à 12, dans lequel la masse comprend un certain nombre d'éléments en forme de bloc d'acier ou de matière plastique qui sont placés dans le support de ballast avec un moyen de levage.

13. Procédé selon l'une quelconque des revendications 10 à 13, dans lequel la masse est déplacée sur le support de ballast, au moins au cours de la pénétration des godets d'aspiration dans le fond sous-marin.
